# EUROPEAN PATENT APPLICATION

(11) **EP 4 563 638 A1**
(43) Date of publication of application: **04.06.2025**
(21) Application number: 23941318.0
(22) Date of filing: 09.11.2023
(51) Int. Cl.: C08K 9/12

(54) **RUBBER FILLER, RUBBER COMPOSITE MATERIAL CONTAINING SAME, PREPARATION METHOD THEREFOR, AND USE THEREOF**

(30) Priority: 13.06.2023 CN 202310700409
(71) Applicant: PetroChina Company Limited, Dongcheng District Beijing 100007 (CN)
(72) Inventor: SHI, Gongchang, Lanzhou, Gansu 730060 (CN); ZHAO, Zhichao, Lanzhou, Gansu 730060 (CN); YANG, Hailong, Lanzhou, Gansu 730060 (CN); WANG, Yongfeng, Lanzhou, Gansu 730060 (CN); SHAO, Wei, Lanzhou, Gansu 730060 (CN); ZHONG, Qilin, Lanzhou, Gansu 730060 (CN); GUI, Qiang, Lanzhou, Gansu 730060 (CN); ZHANG, Zhiqiang, Lanzhou, Gansu 730060 (CN); DONG, Jing, Lanzhou, Gansu 730060 (CN); GONG, Guangbi, Lanzhou, Gansu 730060 (CN)
(74) Representative: Petraz, Gilberto Luigi
(86) International application number: PCT/CN2023/130746
(87) International publication number: WO 2024/255096

(57) **Abstract**

The present disclosure discloses a rubber filler, a rubber composite comprising the same, a preparation method therefor, and use thereof. The rubber filler comprises polydivinylbenzene microspheres and polydopamine-modified white carbon black loaded on the polydivinylbenzene microspheres; wherein the mass ratio of the polydivinylbenzene microspheres to the polydopamine-modified white carbon black is 1:(0.5-20). The rubber composite comprises: a solution polymerized crude rubber and the rubber filler; wherein the rubber filler is added in an amount of 10-60wt% of the dry basis mass of the solution polymerized crude rubber. The present disclosure uses polydivinylbenzene microspheres loaded with polydopamine-modified white carbon black as the filler, solving the problem that the white carbon black is apt to agglomerate and the white carbon black has poor binding force with the rubber. The rubber composite obtained by the present disclosure is suitable for manufacturing green tires.

## Description

### CROSS-REFERENCE TO RELATED APPLICATIONS

The application claims the benefit of the Chinese patent application No. "202310700409.3", filed on June 13, 2023, the content of which is specifically and entirely incorporated herein by reference.

### TECHNICAL FIELD

The present dislcosure relates to the technical field of rubber material, in particular to a rubber filler, a rubber composite comprising the same, a preparation method therefor, and use thereof.

### BACKGROUND ART

The purpose of green tires (or fuel-efficient tires) is to save fueloil and reduce exhaust emissions, the green tires significantly reduce energy consumption compared to conventional radial tires. The solution polymerized styrene-butadiene rubber is more environmentally friendly than the all-purpose emulsion polymerized styrene-butadiene rubber, and the microscopic molecular structure can be controlled and adjusted during the synthesis process as needed, thereby improving both the rolling resistance coefficient and the wet grip index of the tires. In the coming years, the application scenarios of the solution polymerized styrene-butadiene rubber in the tire industry will have an astounding advance. Cis-butadiene rubber, polyisoprene rubber , and butyl rubber are also produced by adopting the solution polymerized process, each of the rubbers has an application in the tire industry.

The most used filler in the tire industry is carbon black at present, however, pressured by the gradually stringent environmental protection requirements in the world, the white carbon black will gradually replace carbon black as the filler with the largest dosage. The white carbon black/solution polymerized styrene-butadiene rubber compounding system is a commonly used compounding system for preparing high-performance green tire tread rubber, however, the white carbon black has a small particle size and poor compatibility with rubber due to its large surface polarity, thus it is apt to agglomerate and can hardly be dispersed. Therefore, the white carbon black requires a surface modification, the commonly used filler surface modifiers in the prior art include titanate coupling agents, silane coupling agents, etc.

CN101798473A discloses a method for modifying the white carbon black with a polysulfide silane coupling agent, thereby preparing the white carbon black/carbon black composite filling, but an increased dosage of the silane coupling agent will cause the decreased vulcanization kinetics, both a vulcanization agent and a vulcanization accelerant need to be supplemented.

CN101220177A discloses a method for preparing a white carbon black/solution-polymerized styrene-butadiene rubber nanometer composite material by modifying white carbon black with an amino-based silane coupling agent. The white carbon black and the silane coupling agent are dispersed in ethanol, and the condensation reaction is carried out at a high temperature; the modified white carbon black powder is added to the solution polymerized styrene-butadiene rubber solution, the materials are stirred and dispersed, the solvent is removed, and then dried, thereby obtaining the white carbon black/solution-polymerized styrene-butadiene rubber nanometer composite material prepared by co-polymerization. However, the method has defects such as the micro-molecular surface modifier has poor processability, small molecules being generated during the modification process, poor storage stability, and the service life of the tire is affected, and the problem that the white carbon black has poor binding force with the rubber cannot be solved.

### SUMMARY OF THE INVENTION

The present dislcosure aims to overcome the defects in the prior art that the white carbon black is apt to agglomerate and the white carbon black has poor binding force with the rubber and provides a rubber filler, a rubber composite comprising the same, a preparation method therefor and use thereof. The rubber composite of the present dislcosure uses the polydivinylbenzene microspheres loaded with the dopamine-modified white carbon black as the filler, it uses the polydivinylbenzene microspheres as the carriers, can more effectively improve the dispersity of the white carbon black, and the polydivinylbenzene microspheres also function as physical entanglement of the cross-linking points, which improve the physicomechanical properties of the materials with the blended rubber through the vulcanization cross-linking effect, and the rubber composite can be used for manufacturing the green tires.

To achieve the above objects, the first aspect of the present dislcosure provides a rubber filler comprising polydivinylbenzene microspheres and polydopamine-modified white carbon black loaded on the polydivinylbenzene microspheres, wherein the mass ratio of the polydivinylbenzene microspheres to the polydopamine-modified white carbon black is 1:(0.5-20).

The second aspect of the present dislcosure provides a method for preparing the rubber filler comprising:
(1) carrying out a first reaction on the white carbon black and dopamine in a first buffer solution to obtain a polydopamine-modified white carbon black;
(2) subjecting the polydivinylbenzene microspheres to a second reaction in a second buffer solution with the polydivinylbenzene microspheres obtained in step (1) to obtain the polydivinylbenzene microspheres loaded with polydopamine-modified white carbon black; wherein the mass ratio of the polydivinylbenzene microspheres to the polydopamine-modified white carbon black is 1:(0.5-20).

The third aspect of the present dislcosure provides a rubber composite comprising a solution polymerized crude rubber, a first filler, and a second filler, wherein the first filler is the rubber filler according to the first aspect, or the rubber filler produced with the aforementioned preparation method according to the second aspect, and the second filler is a polydopamine-modified white carbon black, wherein the total addition amount of the first rubber filler and the second rubber filler is 10-60wt% of the dry basis mass of the solution polymerized crude rubber.

The fourth aspect of the present dislcosure provides a method for preparing the rubber composite comprising: mixing the solution polymerized crude rubber with a first filler and a second filler, and then vulcanizing the mixture to obtain a rubber composite; wherein the first filler is the rubber filler according to the first aspect or the rubber filler produced with the aforementioned preparation method according to the second aspect, and the second filler is a polydopamine-modified white carbon black; the total addition amount of the first rubber filler and the second rubber filler is 10-60wt% of the dry basis mass of the solution polymerized crude rubber.

The fifth aspect of the present dislcosure provides a use of the aforementioned rubber composite or the rubber composite produced with the aforementioned method in a tire.

Due to the aforementioned technical scheme, the present disclosure produces favorable technical effects as follows:
(1) The rubber filler of the present disclosure is polydivinylbenzene microspheres loaded with polydopamine-modified white carbon black, the present disclosure uses the polydopamine-modified white carbon black, which can prevent the white carbon black from self-agglomerating, and improves the dispersibility of the white carbon black; in addition, the polydivinylbenzene microspheres are used as the carriers, which can more effectively improve dispersity of the white carbon black.
(2) The rubber filler of the present disclosure can be used for preparing the rubber composite, the polydivinylbenzene microspheres also function as physical entanglement of the cross-linking points; when a vulcanizing agent is added for vulcanization, the microsphere filler can effectively improve the physico-mechanical properties of the materials with the blended rubber through the vulcanization cross-linking effect; in addition, the catecholamine structure of polydopamine has a higher affinity which can tightly bind with rubber, thereby improving the mechanical strength of the white carbon black/rubber. The rubber composite produced in the present disclosure is suitable for manufacturing green tires.
(3) The preparation method of the present disclosure has the advantages of fewer steps and simple operation, it solves the problems that the white carbon black is apt to agglomerate and the white carbon black has a poor binding force with the rubber.

### BRIEF DESCRIPTION OF THE DRAWINGS

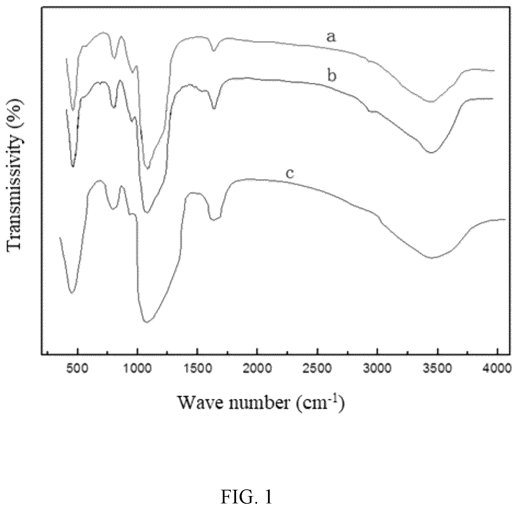

FIG. 1 illustrates the infrared spectrogram of the white carbon black, the polydopamine-modified white carbon black, and the polydivinylbenzene microspheres loaded with polydopamine-modified white carbon black, respectively; wherein curve a illustrates the infrared spectrogram of the white carbon black; curve b illustrates the infrared spectrogram of the polydopamine-modified white carbon black; and curve c illustrates the infrared spectrogram of the polydivinylbenzene microspheres loaded with polydopamine-modified white carbon black.

### DETAILED DESCRIPTION OF THE EMBODIMENTS

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides a rubber filler comprising polydivinylbenzene microspheres and polydopamine-modified white carbon black loaded on the polydivinylbenzene microspheres, wherein the mass ratio of the polydivinylbenzene microspheres to the polydopamine-modified white carbon black is 1:(0.5-20), such as 1:0.5, 1:1, 1:2, 1:3, 1:4, 1:5, 1:6, 1:7, 1:8, 1:9, 1:10, 1:12, 1:14, 1:16, 1:18, 1:20, and a random value within the range consisting of any two numerical values, preferably is 1:(1-10).

The present disclosure uses polydivinylbenzene microspheres with high adsorption capacity, primarily for loading, the present disclosure does not impose limitations to the specific loading patterns of the polydopamine-modified white carbon black, as long as it can be loaded on the polydivinylbenzene microspheres. When the polydopamine-modified white carbon black is loaded on the polydivinylbenzene microspheres (DVB), it may be loaded on the surface of the polydivinylbenzene microspheres, or loaded in the interior pores and channels of the polydivinylbenzene microspheres, or both. It has been found in research that the polydopamine-modified white carbon black mainly deposits on the surface of microspheres.

The present disclosure uses the polydopamine to modify white carbon black, which can prevent the white carbon black from self-agglomerating, and improve the dispersibility of the white carbon black. The catecholamine structure of polydopamine has a higher affinity which can tightly bind with rubber, thereby improving the mechanical strength of the white carbon black/rubber. The dispersibility of the white carbon black is improved more efficiently by using polydivinylbenzene microspheres as the carriers, and the microspheres are desirably compatible with rubber, the microspheres having a high adsorption capacity can be used as a loading filler, during a process of using the rubber filler is used for preparing the rubber composite, the polydivinylbenzene microspheres also function as physical entanglement of the cross-linking points, its physical cross-linking with blended rubber can effectively enhance the physical and mechanical properties of the material, the rubber composite is suitable for manufacturing the green tires.

In some embodiments of the present disclosure, the mass ratio of the white carbon black and polydopamine in the polydopamine-modified white carbon black is 1:(0.05-1), such as 1:0.05, 1:0.08, 1:0.1, 1:0.2, 1:0.3, 1:0.4, 1:0.5, 1:0.6, 1:0.7, 1:0.8, 1:0.9, 1:1, and a random value within the range consisting of any two numerical values, preferably is 1:(0.1-0.6).

In some embodiments of the present disclosure, the polydivinylbenzene microspheres have a particle size within the range of 0.1-1µm, for example, 0.1µm, 0.2µm, 0.3µm, 0.4µm, 0.5µm, 0.6µm, 0.7µm, 0.8µm, 0.9um, 1µm, and a random value within the range consisting of any two numerical values, preferably within the range of 0.2-0.5µm.

In some embodiments of the present disclosure, the white carbon black has a particle size within the range of 20-60nm, e.g., 20nm, 30nm, 40nm, 50nm, 60nm, and a random value within the range consisting of any two numerical values, preferably within the range of 30-50nm.

The second aspect of the present disclosure provides a method for preparaing the rubber filler comprising:
(1) carrying out a first reaction on the white carbon black and dopamine in a first buffer solution to obtain a polydopamine-modified white carbon black;
(2) subjecting the polydivinylbenzene microspheres to a second reaction in a second buffer solution with the polydivinylbenzene microspheres obtained in step (1) to obtain the polydivinylbenzene microspheres loaded with polydopamine-modified white carbon black; wherein the mass ratio of the polydivinylbenzene microspheres to the polydopamine-modified white carbon black is 1:(0.5-20), such as 1:0.5, 1:1, 1:2, 1:3, 1:4, 1:5, 1:6, 1:7, 1:8, 1:9, 1:10, 1:12, 1:14, 1:16, 1:18, 1:20, and a random value within the range consisting of any two numerical values, preferably is 1:(1-10).

As shown in FIG. 1, curve a illustrates the infrared spectrogram of the white carbon black; curve b shows the infrared spectrogram of the polydopamine-modified white carbon black; and curve c exhibits the infrared spectrogram of the polydivinylbenzene microspheres loaded with polydopamine-modified white carbon black, wherein curve a exhibits an asymmetric stretching vibration absorption peaks of Si-O-Si at a wave number of 1099cm⁻¹, a symmetric stretching vibration absorption peak of Si-O-Si at a wave number of 804cm⁻¹, and a bending vibration absorption peaks of Si-O-Si at a wave number of 465cm⁻¹. Curve b shows a weak absorption peak of the benzene ring (1600-1450cm⁻¹), which can be attributed to the absorption of the benzene ring in polydopamine; in curve c, the broadening and enlargement of the absorption peak around 3450cm⁻¹ is caused by the phenolic hydroxyl group and N-H bond carried by the loaded polydopamine, indicating the successful loading of the polydopamine-modified white carbon black on the polydivinylbenzene microspheres.

In some embodiments of the present disclosure, step (1) specifically comprises:
adding an inorganic acid or inorganic base into a weak alkalinity buffering agent solution to obtain a first buffer solution with a pH of 7.5-10.5, wherein the concentration of the buffering agent in the first buffer solution is within the range of 3-15 mmol/L;
adding white carbon black and dopamine into the first buffer solution, carrying out the reaction for 0.5-2h at room temperature, then filtering, washing, and drying to obtain the polydopamine-modified white carbon black.

In the present disclosure, the dried white carbon black is used during the modification process of the white carbon black. The dried white carbon black may be obtained by using the drying techniques commonly used in the art, such as drying the white carbon black in a vacuum at the temperature of 100-120°C.

Further, the mass ratio of the white carbon black and dopamine is 1:(0.05-1), such as 1:0.05, 1:0.08, 1:0.1, 1:0.2, 1:0.3, 1:0.4, 1:0.5, 1:0.6, 1:0.7, 1:0.8, 1:0.9, 1:1, and a random value within the range consisting of any two numerical values, preferably is 1:(0.1-0.6).

Furthermore, the mass ratio of the white carbon black to the first buffer solution is 1:(5-50), for example, 1:5, 1:10, 1:15, 1:20, 1:25, 1:30, 1:40, 1:45, 1:50, and a random value within the range consisting of any two numerical values, preferably is 1:(10-40).

Moreover, the weak alkalinity buffering agent is one or more selected from the group consisting of trihydroxymethyl aminomethane, barbital, barbital-sodium chloride composite buffering agent, boric acid-potassium chloride composite buffering agent, borax-calcium chloride composite buffering agent, disodium hydrogen phosphate, and dipotassium hydrogen phosphate - potassium dihydrogen phosphate composite buffering agent; preferably trihydroxymethyl aminomethane or barbital.

Further, the inorganic acid is one or more of hydrochloric acid, nitric acid, sulfuric acid, and phosphoric acid.

Further, the inorganic base is potassium hydroxide and/or sodium hydroxide.

In some embodiments of the present disclosure, step (2) specifically comprises:
adding an inorganic acid or inorganic base into a weak alkalinity buffering agent solution to obtain a second buffer solution with a pH of 7.5-10.5, wherein the concentration of the buffering agent in the second buffer solution is within the range of 3-15 mmol/L;
adding polydivinylbenzene microspheres and the polydopamine-modified white carbon black obtained in step (1) into the second buffer solution, carrying out the reaction with magnetic stirring at room temperature for 1-4h, then filtering, washing, and drying to obtain the polydivinylbenzene microspheres loaded with the polydopamine-modified white carbon black.

Further, the mass ratio of the polydivinylbenzene microspheres and the second buffer solution is 1:(50-500), such as 1:50, 1:100, 1:150, 1:200, 1:250, 1:300, 1:400, 1:450, 1:500, and a random value within the range consisting of any two numerical values, preferably is 1:(100-400).

Further, the weak alkalinity buffering agent is one or more selected from the group consisting of trihydroxymethyl aminomethane, barbital, barbital-sodium chloride composite buffering agent, boric acid-potassium chloride composite buffering agent, borax-calcium chloride composite buffering agent, disodium hydrogen phosphate, and dipotassium hydrogen phosphate - potassium dihydrogen phosphate composite buffering agent; preferably trihydroxymethyl aminomethane or barbital.

Furthermore, the inorganic acid is one or more of hydrochloric acid, nitric acid, sulfuric acid, and phosphoric acid.

Further, the inorganic base is potassium hydroxide and/or sodium hydroxide.

The third aspect of the present disclosure provides a rubber composite comprising a solution polymerized crude rubber, a first filler, and a second filler, wherein the first filler is the rubber filler according to the first aspect, or the rubber filler produced with the aforementioned method according to the second aspect, and the second filler is a polydopamine-modified white carbon black, wherein the total addition amount of the first rubber filler and the second rubber filler is 10-60wt% of the dry basis mass of the solution polymerized crude rubber, such as 10wt%, 15wt%, 20wt%, 25wt%, 30wt%, 35wt%, 40wt%, 45wt%, 50wt%, 55wt%, 60wt%, and a random value within the range consisting of any two numerical values, preferably 20-40wt%.

In some embodiments of the present disclosure, the mass ratio of the first filler and the second filler is 1:(0.5-20), e.g., 1:0.5, 1:1, 1:2, 1:3, 1:4, 1:5, 1:6, 1:7, 1:8, 1:9, 1:10, 1:12, 1:14, 1:16, 1:18, 1:20, and a random value within the range consisting of any two numerical values, preferably is 1:(1-10).

In some embodiments of the present disclosure, the addition amount of the second rubber filler is 10-40wt% of the dry basis mass of the solution polymerized crude rubber, such as 10wt%, 15wt%, 20wt%, 25wt%, 30wt%, 35wt%, 40wt%, and a random value within the range consisting of any two numerical values, preferably 20-30wt%.

In some embodiments of the present disclosure, the rubber composite further comprises an auxiliary agent.

Further, the auxiliary agent is one or more selected from the group consisting of a vulcanizing agent, an anti-aging agent, an accelerant, and an activator.

The types, functions, and addition amounts of the auxiliary agents in the invention are well-known among those skilled in the art, for instance, the relevant content is described in the textbook "Practical Rubber Formulation Technology", it will not be repeatedly described herein.

In some embodiments of the invention, the solution-polymerized crude rubber is one or more selected from the group consisting of solution-polymerized styrene-butadiene rubber, polyisoprene rubber, cis-butadiene rubber, and butyl rubber.

Further, the number average molecular weight Mn of the solution polymerized styrene-butadiene rubber before coupling is within the range of 100,000-400,000 g/mol, and the content of vinyl is within the range of 30-70wt%.

Further, the weight average molecular weight Mw of the polyisoprene rubber is within the range of 150,000-300,000 g/mol.

Further, the weight average molecular weight Mw of the cis-butadiene rubber is within the range of 200,000-300,000 g/mol.

Further, the weight average molecular weight Mw of the butyl rubber is within the range of 100,000-500,000 g/mol.

The fourth aspect of the present dislcosure provides a method for preparaing the rubber composite comprising:
mixing the solution polymerized crude rubber with a first filler and a second filler, and then vulcanizing the mixture to obtain a rubber composite; wherein the first filler is the rubber filler according to the first aspect, or the rubber filler produced with the aforementioned preparation method according to the second aspect, and the second filler is a polydopamine-modified white carbon black; the total addition amount of the first rubber filler and the second rubber filler is 10-60wt% of the dry basis mass of the solution polymerized crude rubber, e.g., 10wt%, 15wt%, 20wt%, 25wt%, 30wt%, 35wt%, 40wt%, 45wt%, 50wt%, 55wt%, 60wt%, and a random value within the range consisting of any two numerical values, preferably is 20-40wt%.

The present dislcosure uses the polydopamine-modified white carbon black loaded polydivinylbenzene microspheres as a first rubber filter, which can prevent the white carbon black from self-agglomerating, and improve dispersibility and stability of the white carbon black; in addition, the polydopamine-modified white carbon black can prevent the white carbon black from self-agglomerating, improve dispersity of the white carbon black and enhance the mechanical strength of the white carbon black/rubber, during the preparation process of the rubber composite, the polydivinylbenzene microspheres can also function as physical entanglement of the cross-linking points, its physical cross-linking action with blended rubber can effectively enhance the physical and mechanical properties of the material, mainly improve the strength, hardness, and wear resistance of the rubber material, the two rubber fillers produce a synergistic effect, the polydivinylbenzene microspheres are used as the carriers, such that the polydopamine-modified white carbon black is more effectively dispersed and obtain an improved stability, the overall performance of the material is improved more effectively than a single filler, and the obtained rubber composite is suitable for manufacturing the green tires.

In the present disclosure, a conventional mixing method may be employed in the rubber mixing process, for example, mixing by an open mill and mixing by an internal mixer.

In some embodiments of the present disclosure, the mass ratio of the first filler and the second filler is 1:(0.5-20), e.g., 1:0.5, 1:1, 1:2, 1:3, 1:4, 1:5, 1:6, 1:7, 1:8, 1:9, 1:10, 1:12, 1:14, 1:16, 1:18, 1:20, and a random value within the range consisting of any two numerical values, preferably is 1:(1-10).

In some embodiments of the present disclosure, the addition amount of the second rubber filler is 10-40wt% of the dry basis mass of the solution polymerized crude rubber, e.g., 10wt%, 15wt%, 20wt%, 25wt%, 30wt%, 35wt%, 40wt%, and a random value within the range consisting of any two numerical values, preferably is 20-30wt%.

In some embodiments of the present disclosure, an auxiliary agent is further added in the mixing step.

Further, the auxiliary agent is one or more selected from the group consisting of a vulcanizing agent, an anti-aging agent, an accelerant, and an activator.

One or more auxiliary agents of a vulcanizing agent, an anti-aging agent, an accelerant, and an activator may be added in the rubber mixing process, and the addition amount and the function of the auxiliary agents are well-known among those skilled in the art, for example, the relevant content is described in the textbook "Practical Rubber Formulation Technology", it will not be repeatedly described herein.

In some embodiments of the present disclosure, the solution-polymerized crude rubber is one or more selected from the group consisting of solution-polymerized styrene-butadiene rubber, polyisoprene rubber , cis-butadiene rubber, and butyl rubber.

Further, the number average molecular weight Mn of the solution polymerized styrene-butadiene rubber before coupling is within the range of 100,000-400,000 g/mol, and the content of vinyl is within the range of 30-70wt%.

Further, the weight average molecular weight Mw of the polyisoprene rubber is within the range of 150,000-300,000 g/mol.

Further, the weight average molecular weight Mw of the cis-butadiene rubber is within the range of 200,000-300,000 g/mol.

Further, the weight average molecular weight Mw of the butyl rubber is within the range of 100,000-500,000 g/mol.

The fifth aspect of the present dislcosure provides a use of the aforementioned rubber composite or the rubber composite produced with the aforementioned preparation method in a tire.

The rubber composite of the present dislcosure solves the dispersibility problem of white carbon black and addresses the problem that the white carbon black has poor binding force with the rubber, thereby improving the comprehensive operational performance of the tires.

Further, the aforementioned rubber composite is used in green tires.

The present dislcosure solves the problem that the white carbon black is apt to agglomerate and the white carbon black has poor binding force with the rubber. In addition, the polydivinylbenzene microspheres are used as the carriers, so that the dispersibility of the white carbon black can be more effectively improved, the polydivinylbenzene microspheres can also function as physical entanglement of the cross-linking points, its physical cross-linking action with blended rubber can effectively enhance the physical and mechanical properties of the material, and the polydivinylbenzene microspheres can be used for manufacturing the green tires. Moreover, the method of the present disclosure has the advantages of fewer reaction steps and simple operations.

Unless otherwise specified in the present dislcosure, % refers to mass percent.

The technical solutions in the present disclosure will be clearly and completely described below with reference to examples, it is obvious that the examples described herein are a portion of examples in the present disclosure, instead of the entire examples of the present disclosure. All other examples, which can be obtained by those skilled in the art without paying any creative labor based on the examples in the present disclosure, fall into the protection scope of the present disclosure.

If the specific conditions are not indicated in the following examples and comparative examples, the reactions are performed according to the conventional conditions or the conditions suggested by the manufacturers. If the manufacturers of the reagent or instrument are not specified, both the reagent and the instrument pertain to the commercially available conventional products.

In the following examples of the present disclosure,
(1) The sources of raw materials were as follows:
   The white carbon black was purchased from Weifang Wanli Additive Co., Ltd.;
   Dopamine and trihydroxymethyl aminomethane with a purity of 99.5% were commercially available from Acros Organics Corporation;
   Barbital, sodium chloride, borax, calcium chloride, boric acid, potassium chloride, dipotassium phosphate, potassium dihydrogen phosphate, and disodium hydrogen phosphate, with a purity of 99%, were commercially available from the Sinopharm Group Chemical Reagent Co., Ltd.;
   Polydivinylbenzene microspheres with a particle size of 0.2-0.5µm were purchased from Suzhou Zhiwei Nano Technology Co., Ltd.;
   The solution polymerized styrene-butadiene rubber glue solution was purchased from Lanzhou Chemical Research Center and Dushanzi Petrochemical Company;
   The polyisoprene rubber was commercially available from PetroChina Jilin Petrochemical Company and Lanzhou Chemical Research Center;
   The butyl rubber was commercially available from Bayer Corporation in Germany.
(2) The analysis and test methods:
   Infrared spectrum analysis of the samples: the functional group analysis was performed on the nanometer white carbon black samples before and after modification with the infrared spectrometer manufactured by BRUKER OPTICS GMBH in Germany. Samples were dried in a vacuum oven at 100°C, and subjected to tablet pressing with potassium bromide, the collected wave number range was from 400cm⁻¹ to 4000cm⁻¹.

Differential thermal analysis of polymer deposition: the deposition amount of polydopamine was assayed by using the synchronous thermal analyzer (TG/DSC, STA 449C) manufactured by NETZSCH GMBH in Germany. The samples were subjected to drying in a vacuum oven at 100°C, and the weight loss data of the samples in the temperature range of 20-600°C was collected.

Glass-transition temperature analysis: the glass-transition temperature was determined by using a synchronous thermal analyzer (TG/DSC, STA449C) manufactured by NETZSCH GMBH in Germany.

Dynamical and mechanical properties analysis: the mechanical properties of the samples were tested by using a universal material testing machine with a model 5567, manufactured by Instron Corporation in the United States of America (USA).

Tensile strength, and elongation at break: tested according to the China National Standard GB/T528-2009;
Shore A hardness: measured according to the China National Standard GB/T531.1-2008.

### Example 1

(1) Modification of the white carbon black: the white carbon black was subjected to drying under vacuum at 100°C; the dried white carbon black and dopamine were added into a prepared trihydroxymethyl aminomethane buffer solution with a pH of 8.5 (the concentration of trihydroxymethyl aminomethane was 9 mmol/L), carried out the reaction at room temperature for 1.5h, the reaction product was then subjected to filtering, washing, and drying to obtain a polydopamine-modified white carbon black, which was marked as polydopamine-modified white carbon black-1; wherein the mass ratio of the white carbon black and dopamine was 1:0.1, and the mass ratio of the white carbon black and the buffer solution was 1:20;
(2) Preparation of polydivinylbenzene microspheres (DVB) loaded with the polydopamine-modified white carbon black: the polydopamine-modified white carbon black-1 prepared in step (1) was subjected to drying under vacuum at 100°C; polydivinylbenzene microspheres with a particle size of 0.2µm, the dried polydopamine-modified white carbon black-1, and the prepared trihydroxymethyl aminomethane buffer solution with a pH of 8.5 (the concentration of trihydroxymethyl aminomethane was 9 mmol/L) were added into a round-bottomed flask, the reaction was performed with a magnetic stirring at room temperature for 3h, the reaction product was then subjected to filtering, washing, and drying to obtain the polydivinylbenzene microspheres-1 loaded with polydopamine-modified white carbon black; wherein the mass ratio of the polydivinylbenzene microspheres and the polydopamine-modified white carbon black-1 was 1:5; the mass ratio of the polydivinylbenzene microspheres and the buffer solution was 1: 300;
(3) Preparation of a rubber composite: the solution polymerized styrene-butadiene rubber-1 (the parameters were shown in Table 1), the polydopamine-modified white carbon black-1 obtained in step (1), the polydivinylbenzene microspheres-1 loaded with polydopamine-modified white carbon black obtained in step (2), and other auxiliary agents were mixed, wherein the formula of the solution polymerized crude rubber and the other auxiliary agents were shown in Table 2, the addition amount of the polydopamine-modified white carbon black-1 was 17wt% of the solution polymerized styrene-butadiene rubber-1, and the addition amount of the polydivinylbenzene microspheres loaded with polydopamine-modified white carbon black-1 was 3wt% of the solution polymerized styrene-butadiene rubber-1; the mixture was then subjected to vulcanizing to prepare a rubber composite, namely polydivinylbenzene microsphere filler loaded with polydopamine-modified white carbon black/solution polymerized butadiene-styrene rubber composite, which was denoted as A-1, and the test results were shown in Table 7.

**Table 1 Parameters of the solution polymerized butadiene-styrene rubber-1**

| Sample name | Styrene | Vinyl | Mn (before coupling) | Tg |
|---|---|---|---|---|
| Solution polymerized styrene-butadiene rubber-1 | 25% | 55% | 300,000 g/mol | -30°C |

**Table 2 Formulation of rubber materials**

| Name of raw materials | | Parts by weight | Category of raw materials |
|---|---|---|---|
| Solution polymerized crude rubber | | 100 | Synthetic rubber |
| Rubber filler | | 10-60 | Reinforcing agent |
| Other auxiliary agents | Zinc oxide | 3 | Activator |
| | Stearic acid | 2 | Activator |
| | Anti-aging agent 4020 | 1 | Anti-aging agent |
| | Sulfur | 1.5 | Vulcanizing agent |
| | Accelerant NZ | 0.9 | Accelerant |

### Example 2

(1) Modification of the white carbon black: the white carbon black was subjected to drying under vacuum at 110°C; the dried white carbon black and dopamine were added into a prepared trihydroxymethyl aminomethane buffer solution with a pH of 9 (the concentration of trihydroxymethyl aminomethane was 6 mmol/L), carried out the reaction at room temperature for 2h, the reaction product was then subjected to filtering, washing, and drying to obtain a polydopamine-modified nanometer white carbon black, which was marked as polydopamine-modified white carbon black-2; wherein the mass ratio of the white carbon black and dopamine was 1:0.2, and the mass ratio of the white carbon black and the buffer solution was 1:30;
(2) Preparation of polydivinylbenzene microspheres (DVB) loaded with the polydopamine-modified white carbon black: the polydopamine-modified white carbon black-2 prepared in step (1) was subjected to drying under vacuum at 110°C; polydivinylbenzene microspheres with a particle size of 0.4µm, the dried polydopamine-modified white carbon black-2, and the prepared trihydroxymethyl aminomethane buffer solution with a pH of 9 (the concentration of trihydroxymethyl aminomethane was 6 mmol/L) were added into a round-bottomed flask, the reaction was performed with a magnetic stirring at room temperature for 4h, the reaction product was then subjected to filtering, washing, and drying to obtain the polydivinylbenzene microspheres-2 loaded with polydopamine-modified white carbon black; wherein the mass ratio of the polydivinylbenzene microspheres and the polydopamine-modified white carbon black-2 was 1:7; the mass ratio of the polydivinylbenzene microspheres and the buffer solution was 1:400;
(3) Preparation of a rubber composite: the polydopamine-modified white carbon black-2 obtained in step (1), the polydivinylbenzene microspheres-2 loaded with polydopamine-modified white carbon black obtained in step (2), the solution polymerized butadiene-styrene rubber-2 (its parameters were shown in Table 3), and other auxiliary agents were mixed, wherein the formula of the solution polymerized crude rubber and the other auxiliary agents were shown in Table 2, the addition amount of the polydopamine-modified white carbon black-2 in step (1) was 20wt% of the solution polymerized styrene-butadiene rubber-2, and the addition amount of the polydivinylbenzene microspheres loaded with polydopamine-modified white carbon black-2 was 5wt% of the solution polymerized styrene-butadiene rubber-2; the mixture was then subjected to vulcanizing to prepare a rubber composite, namely polydivinylbenzene microsphere filler loaded with polydopamine-modified white carbon black/solution polymerized butadiene-styrene rubber composite, which was denoted as A-2, and the test results were shown in Table 7.

**Table 3 Parameters of the solution polymerized butadiene-styrene rubber-2**

| Sample name | Styrene | Vinyl | Mn (before coupling) | Tg |
|---|---|---|---|---|
| Solution polymerized styrene-butadiene rubber-2 | 25% | 65% | 260,000 g/mol | -25°C |

### Example 3

(1) Modification of the white carbon black: the white carbon black was subjected to drying under vacuum at 110°C; the dried white carbon black and dopamine were added into a prepared trihydroxymethyl aminomethane buffer solution with a pH of 9 (the concentration of trihydroxymethyl aminomethane was 10 mmol/L), carried out the reaction at room temperature for 2h, the reaction product was then subjected to filtering, washing, and drying to obtain a polydopamine-modified nanometer white carbon black, which was marked as polydopamine-modified white carbon black-3; wherein the mass ratio of the white carbon black and dopamine was 1:0.3, and the mass ratio of the white carbon black and the buffer solution was 1:30;
(2) Preparation of polydivinylbenzene microspheres (DVB) loaded with the polydopamine-modified white carbon black: the polydopamine-modified white carbon black-3 prepared in step (1) was subjected to drying under vacuum at 110°C; polydivinylbenzene microspheres with a particle size of 0.3µm, the dried polydopamine-modified white carbon black-3, and the prepared trihydroxymethyl aminomethane buffer solution with a pH of 9 (the concentration of trihydroxymethyl aminomethane was 10 mmol/L) were added into a round-bottomed flask, the reaction was performed with a magnetic stirring at room temperature for 4h, the reaction product was then subjected to filtering, washing, and drying to obtain the polydivinylbenzene microspheres-3 loaded with polydopamine-modified white carbon black; wherein the mass ratio of the polydivinylbenzene microspheres and the polydopamine-modified white carbon black-3 was 1:8; the mass ratio of the polydivinylbenzene microspheres and the buffer solution was 1: 400;
(3) Preparation of a rubber composite: the polydopamine-modified white carbon black-3 obtained in step (1), the polydivinylbenzene microspheres-3 loaded with polydopamine-modified white carbon black obtained in step (2), solution polymerized styrene-butadiene rubber-3 (its parameters were shown in Table 4), and other auxiliary agents were mixed, wherein the formula of the solution polymerized crude rubber and the other auxiliary agents were shown in Table 2, the addition amount of the polydopamine-modified white carbon black-3 in step (1) was 25wt% of the solution polymerized styrene-butadiene rubber-3, and the addition amount of the polydivinylbenzene microspheres loaded with polydopamine-modified white carbon black-3 was 5wt% of the solution polymerized styrene-butadiene rubber-3; the mixture was then subjected to vulcanizing to prepare a rubber composite, namely polydivinylbenzene microsphere filler loaded with polydopamine-modified white carbon black/solution polymerized butadiene-styrene rubber composite, which was denoted as A-3, and the test results were shown in Table 7.

Table 4 Parameters of solution polymerized styrene-butadiene rubber-3

| Sample name | Styrene | Vinyl | Mn (before coupling) | Tg |
|---|---|---|---|---|
| Solution polymerized styrene-butadiene rubber-3 | 25% | 70% | 230,000 g/mol | -23°C |

### Example 4

(1) Modification of the white carbon black: the white carbon black was subjected to drying under vacuum at 110°C; the dried white carbon black and dopamine were added into a prepared barbital/sodium chloride buffer solution with a pH of 8.5 (the concentration of barbital/sodium chloride was 6 mmol/L), carried out the reaction at room temperature for 2h, the reaction product was then subjected to filtering, washing, and drying to obtain a polydopamine-modified nanometer white carbon black, which was marked as polydopamine-modified white carbon black-4; wherein the mass ratio of the white carbon black and dopamine was 1:0.1, and the mass ratio of the white carbon black and the buffer solution was 1:20;
(2) Preparation of polydivinylbenzene microspheres (DVB) loaded with the polydopamine-modified white carbon black: the polydopamine-modified white carbon black-4 prepared in step (1) was subjected to drying under vacuum at 110°C; polydivinylbenzene microspheres with a particle size of 0.3µm, the dried polydopamine-modified white carbon black-4, and the prepared barbital/sodium chloride buffer solution with a pH of 8.5 (the concentration of barbital/sodium chloride was 6 mmol/L) were added into a round-bottomed flask, the reaction was performed with a magnetic stirring at room temperature for 4h, the reaction product was then subjected to filtering, washing, and drying to obtain the polydivinylbenzene microspheres-4 loaded with polydopamine-modified white carbon black; wherein the mass ratio of the polydivinylbenzene microspheres and the polydopamine-modified white carbon black-4 was 1:5; the mass ratio of the polydivinylbenzene microspheres and the buffer solution was 1:300;
(3) Preparation of a rubber composite: the polydopamine-modified white carbon black-4 obtained in step (1), the polydivinylbenzene microspheres-4 loaded with polydopamine-modified white carbon black obtained in step (2), polyisoprene rubber-1, and other auxiliary agents were mixed, wherein the formula of the solution polymerized crude rubber and the other auxiliary agents were shown in Table 2, the parameters of polyisoprene rubber-1 were shown in Table 5; wherein the addition amount of the polydopamine-modified white carbon black-4 in step (1) was 17wt% of the polyisoprene rubber, and the addition amount of the polydivinylbenzene microspheres-4 loaded with polydopamine-modified white carbon black in step (2) was 3wt% of the polyisoprene rubber; the mixture was then subjected to vulcanizing to prepare a rubber composite, namely polydivinylbenzene microsphere filler loaded with polydopamine-modified white carbon black/ polyisoprene rubber composite, which was denoted as A-4, and the test results were shown in Table 7.

**Table 5 Parameters of polyisoprene rubber-1**

| Sample name | Content of cis-1,4 structure (wt%) | Content of 3,4-structure (wt%) | Mw (10,000 g/mol) | Mooney viscosity ML (1+4) 100°C |
|---|---|---|---|---|
| Polyisoprene rubber-1 | 96.1 | 4.4 | 23 | 73 |

### Example 5

(1) Modification of the white carbon black: the white carbon black was subjected to drying under vacuum at 110°C; the dried white carbon black and dopamine were added into a prepared barbital/sodium chloride buffer solution with a pH of 8 (the concentration of barbital/sodium chloride was 9 mmol/L), carried out the reaction at room temperature for 2h, the reaction product was then subjected to filtering, washing, and drying to obtain a polydopamine-modified nanometer white carbon black, which was marked as polydopamine-modified white carbon black-5; wherein the mass ratio of the white carbon black and dopamine was 1:0.3, and the mass ratio of the white carbon black and the buffer solution was 1:25;
(2) Preparation of polydivinylbenzene microspheres (DVB) loaded with the polydopamine-modified white carbon black: the polydopamine-modified white carbon black-5 prepared in step (1) was subjected to drying under vacuum at 110°C; polydivinylbenzene microspheres with a particle size of 0.4µm, the dried polydopamine-modified white carbon black-5, and the prepared barbital/sodium chloride buffer solution with a pH of 8 (the concentration of barbital/sodium chloride was 9 mmol/L) were added into a round-bottomed flask, the reaction was performed with a magnetic stirring at room temperature for 4h, the reaction product was then subjected to filtering, washing, and drying to obtain the polydivinylbenzene microspheres-5 loaded with polydopamine-modified white carbon black; wherein the mass ratio of the polydivinylbenzene microspheres and the polydopamine-modified white carbon black-5 was 1:8; the mass ratio of the polydivinylbenzene microspheres and the buffer solution was 1:400;
(3) Preparation of a rubber composite: the polydopamine-modified white carbon black-5 obtained in step (1), the polydivinylbenzene microspheres-5 loaded with polydopamine-modified white carbon black obtained in step (2), polyisoprene rubber-2, and other auxiliary agents were mixed, wherein the formula of the solution polymerized crude rubber and the other auxiliary agents were shown in Table 2, the parameters of polyisoprene rubber-2 rubber were shown in Table 6; wherein the addition amount of the polydopamine-modified white carbon black-5 in step (1) was 24wt% of the polyisoprene rubber, and the addition amount of the polydivinylbenzene microspheres-5 loaded with polydopamine-modified white carbon black in step (2) was 6wt% of the polyisoprene rubber; the mixture was then subjected to vulcanizing to prepare a rubber composite, namely polydivinylbenzene microsphere filler loaded with polydopamine-modified white carbon black/polyisoprene rubber composite, which was denoted as A-5, and the test results were shown in Table 7.

**Table 6 Parameters of polyisoprene rubber-2**

| Sample name | Content of cis-1,4 structure (wt%) | Content of 3,4-structure (wt%) | Mw (10,000 g/mol) | Mooney viscosity ML (1+4) 100°C |
|---|---|---|---|---|
| Polyisoprene rubber-2 | 95.9 | 4.4 | 25 | 75 |

### Example 6

(1) Modification of the white carbon black: the white carbon black was subjected to drying under vacuum at 110°C; the dried white carbon black and dopamine were added into a prepared barbital/sodium chloride buffer solution with a pH of 8.5 (the concentration of barbital/sodium chloride was 8 mmol/L), carried out the reaction at room temperature for 2h, the reaction product was then subjected to filtering, washing, and drying to obtain a polydopamine-modified nanometer white carbon black, which was marked as polydopamine-modified white carbon black-6; wherein the mass ratio of the white carbon black and dopamine was 1:0.1, and the mass ratio of the white carbon black and the buffer solution was 1:20;
(2) Preparation of polydivinylbenzene microspheres (DVB) loaded with the polydopamine-modified white carbon black: the polydopamine-modified white carbon black-6 prepared in step (1) was subjected to drying under vacuum at 110°C; polydivinylbenzene microspheres with a particle size of 0.2µm, the dried polydopamine-modified white carbon black-6, and the prepared barbital/sodium chloride buffer solution with a pH of 8.5 (the concentration of barbital/sodium chloride was 8 mmol/L) were added into a round-bottomed flask, the reaction was performed with a magnetic stirring at room temperature for 4h, the reaction product was then subjected to filtering, washing, and drying to obtain the polydivinylbenzene microspheres-6 loaded with polydopamine-modified white carbon black; wherein the mass ratio of the polydivinylbenzene microspheres and the polydopamine-modified white carbon black-6 was 1:5; the mass ratio of the polydivinylbenzene microspheres and the buffer solution was 1:300;
(3) Preparation of a rubber composite: the polydopamine-modified white carbon black-6 obtained in step (1), the polydivinylbenzene microspheres-6 loaded with polydopamine-modified white carbon black obtained in step (2), butyl rubber and other auxiliary agents were mixed, wherein the formula of the solution polymerized rubber crude rubber and the other auxiliary agents were shown in Table 2, wherein the addition amount of the polydopamine-modified white carbon black-6 in step (1) was 20wt% of the butyl rubber, and the addition amount of the polydivinylbenzene microspheres-6 loaded with polydopamine-modified white carbon black in step (2) was 5wt% of the butyl rubber; the mixture was then subjected to vulcanizing to prepare a rubber composite, namely polydivinylbenzene microsphere filler loaded with polydopamine-modified white carbon black/butyl rubber composite, which was denoted as A-6, and the test results were shown in Table 7.

### Example 7

(1) Modification of the white carbon black: the white carbon black was subjected to drying under vacuum at 110°C; the dried white carbon black and dopamine were added into a prepared barbital/sodium chloride buffer solution with a pH of 7.8 (the concentration of barbital/sodium chloride was 9 mmol/L), carried out the reaction at room temperature for 2h, the reaction product was then subjected to filtering, washing, and drying to obtain a polydopamine-modified nanometer white carbon black, which was marked as polydopamine-modified white carbon black-7; wherein the mass ratio of the white carbon black and dopamine was 1:0.2, and the mass ratio of the white carbon black and the buffer solution was 1:25;
(2) Preparation of polydivinylbenzene microspheres (DVB) loaded with the polydopamine-modified white carbon black: the polydopamine-modified white carbon black-7 prepared in step (1) was subjected to drying under vacuum at 110°C; polydivinylbenzene microspheres with a particle size of 0.4µm, the dried polydopamine-modified white carbon black-7, and the prepared barbital/sodium chloride buffer solution with a pH of 7.8 (the concentration of barbital/sodium chloride was 9 mmol/L) were added into a round-bottomed flask, the reaction was performed with a magnetic stirring at room temperature for 4h, the reaction product was then subjected to filtering, washing, and drying to obtain the polydivinylbenzene microspheres-7 loaded with polydopamine-modified white carbon black; wherein the mass ratio of the polydivinylbenzene microspheres and the polydopamine-modified white carbon black-7 was 1:8; the mass ratio of the polydivinylbenzene microspheres and the buffer solution was 1:400;
(3) Preparation of a rubber composite: the polydopamine-modified white carbon black-7 obtained in step (1), the polydivinylbenzene microspheres-7 loaded with polydopamine-modified white carbon black obtained in step (2), butyl rubber, and other auxiliary agents were mixed, wherein the formula of the solution polymerized rubber crude rubber and the other auxiliary agents were shown in Table 2, wherein the addition amount of the polydopamine-modified white carbon black-7 in step (1) was 30wt% of the butyl rubber, and the addition amount of the polydivinylbenzene microspheres-7 loaded with polydopamine-modified white carbon black in step (2) was 10wt% of the butyl rubber; the mixture was then subjected to vulcanizing to prepare a rubber composite, namely polydivinylbenzene microsphere filler loaded with polydopamine-modified white carbon black/butyl rubber composite, which was denoted as A-7, and the test results were shown in Table 7.

### Example 8

The rubber composite was prepared according to the method of Example 7, except that the mass ratio of the polydivinylbenzene microspheres and the polydopamine-modified white carbon black-7 in step (2) was 1:1; a rubber composite was prepared, which was denoted as A-8, and the test results were shown in Table 7.

### Example 9

The rubber composite was prepared according to the method of Example 7, except that the mass ratio of the polydivinylbenzene microspheres and the polydopamine-modified white carbon black-7 in step (2) was 1:0.5; a rubber composite was prepared, which was denoted as A-9, and the test results were shown in Table 7.

### Example 10

The rubber composite was prepared according to the method of Example 7, except that the mass ratio of the polydivinylbenzene microspheres and the polydopamine-modified white carbon black-7 in step (2) was 1:10; a rubber composite was prepared, which was denoted as A-10, and the test results were shown in Table 7.

### Example 11

The rubber composite was prepared according to the method of Example 7, except that the mass ratio of the polydivinylbenzene microspheres and the polydopamine-modified white carbon black-7 in step (2) was 1:15; a rubber composite was prepared, which was denoted as A-11, and the test results were shown in Table 7.

### Example 12

The rubber composite was prepared according to the method of Example 7, except that in step (3) preparation process of rubber composite, the addition amount of the polydopamine-modified white carbon black-7 in step (1) was 20wt% of the butyl rubber, and the addition amount of the polydivinylbenzene microspheres-7 loaded with polydopamine-modified white carbon black in step (2) was 40wt% of the butyl rubber; a rubber composite was prepared, which was denoted as A-12, and the test results were shown in Table 7.

### Example 13

The rubber composite was prepared according to the method of Example 7, except that in in step (3) preparation process of rubber composite, the addition amount of the polydopamine-modified white carbon black-7 in step (1) was 40wt% of the butyl rubber, and the addition amount of the polydivinylbenzene microspheres-7 loaded with polydopamine-modified white carbon black in step (2) was 20wt% of the butyl rubber; a rubber composite was prepared, which was denoted as A-13, and the test results were shown in Table 7.

### Comparative Example 1

The rubber composite was prepared according to the method of Example 1, except that step (2) was not carried out, and step (3) preparation of a rubber composite: the white carbon black occupied 17wt% of the solution polymerized styrene-butadiene rubber, the polydopamine-modified white carbon black-1 occupied 13wt% of the solution polymerized styrene-butadiene rubber, the solution polymerized crude rubber and other auxiliary agents as shown in Table 2 were mixed; the mixture was then subjected to vulcanizing to prepare a sample of the white carbon black/solution polymerized butadiene-styrene rubber composite, which was denoted as D-1, and the test results were shown in Table 7.

### Comparative Example 2

The rubber composite was prepared according to the method of Example 1, except that in step (3) preparation of a rubber composite, the polydopamine-modified white carbon black-1 of step (1) was not added, the addition amount of the polydivinylbenzene microspheres-1 loaded with the polydopamine-modified white carbon black of step (2) was 10wt% of the solution polymerized styrene-butadiene rubber-1; a rubber composite was obtained, which was denoted as D-2, and the test results were shown in Table 7.

### Comparative Example 3

The rubber composite was prepared according to the method of Example 1, except that in step (3) preparation of a rubber composite, the polydivinylbenzene microspheres-1 loaded with the polydopamine-modified white carbon black in step (2) was not added, the addition amount of the polydopamine-modified white carbon black-1 in step (1) was 40wt% of the solution polymerized styrene-butadiene rubber-1; a rubber composite was obtained, which was denoted as D-3, and the test results were shown in Table 7.

### Comparative Example 4

The rubber composite was prepared according to the method of Example 3, except that the step (2) was not carried out, and step (3) preparation of a rubber composite: the white carbon black occupied 25wt% of the solution polymerized styrene-butadiene rubber, the polydopamine-modified white carbon black-3 obtained in step (1) occupied 5wt% of the solution polymerized styrene-butadiene rubber, the solution polymerized crude rubber and other auxiliary agents as shown in Table 2 were mixed; the mixture was then subjected to vulcanizing to prepare a sample of the white carbon black/solution polymerized butadiene-styrene rubber composite, which was denoted as D-4, and the test results were shown in Table 7.

**Table 7 Test results of the rubber composite**

| Sample name | Tensile strength (MPa) | Elongatio n at break (%) | Shore A hardness (degree) | Tear strength (kN/m) | Glass-transition temperature (°C) |
|---|---|---|---|---|---|
| A-1 | 15.5 | 561 | 56 | 23.5 | -22.7 |
| A-2 | 16.6 | 571 | 57 | 22.5 | -21.6 |
| A-3 | 17.5 | 493 | 57 | 23.7 | -19.2 |
| A-4 | 26.3 | 776 | 46 | 32 | -71.3 |
| A-5 | 27.5 | 796 | 49 | 34 | -68.3 |
| A-6 | 15.5 | 470 | 56 | 23.1 | -66.2 |
| A-7 | 17.6 | 480 | 62 | 25.1 | -64.6 |
| A-8 | 18.7 | 490 | 64 | 26.1 | -63.4 |
| A-9 | 18.4 | 487 | 63 | 25.2 | -61.5 |
| A-10 | 18.5 | 492 | 53 | 23.7 | -60.7 |
| A-11 | 18.3 | 493 | 51 | 23.2 | -59.4 |
| A-12 | 18.9 | 510 | 65 | 27.1 | -64.6 |
| A-13 | 16.9 | 479 | 60 | 23.6 | -63.7 |
| D-1 | 9.9 | 501 | 52 | 15.3 | -19.7 |
| D-2 | 11.5 | 507 | 54 | 17.5 | -21.9 |
| D-3 | 10.2 | 503 | 52 | 16.3 | -20.5 |
| D-4 | 9.7 | 438 | 56 | 16.7 | -17.3 |

As can be seen from the results of Table 7, the Examples have significantly better effects than the Comparative Examples. The polydivinylbenzene microspheres loaded with polydopamine-modified white carbon black are used in the present disclosure as a filler to replace a part of the polydopamine-modified white carbon black, and uses the polydivinylbenzene microspheres as a carrier, so that the modified white carbon black is not apt to agglomerate, the dispersibility of the modified white carbon black is improved, the dispersity and stability of the modified white carbon black can be more effectively enhanced; in addition, the modified polydivinylbenzene microspheres can also play a role in an entanglement of crosslinking points, may generate an interaction force with the white carbon black due to the polar functional groups on their surface; moreover, the modified polydivinylbenzene microspheres improve the physical and mechanical properties of the material through the vulcanization and cross-linking effects.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A rubber filler comprising: polydivinylbenzene microspheres and polydopamine-modified white carbon black loaded on the polydivinylbenzene microspheres, wherein the mass ratio of the polydivinylbenzene microspheres to the polydopamine-modified white carbon black is 1:(0.5-20).

2. The rubber filler according to claim 1, wherein the mass ratio of the polydivinylbenzene microspheres to the polydopamine-modified white carbon black is 1:(1-10);
and/or the mass ratio of the white carbon black and polydopamine in the polydopamine-modified white carbon black is 1:(0.05-1).

3. The rubber filler according to claim 1 or 2, wherein the polydivinylbenzene microspheres have a particle size within the range of 0.1-1µm.

4. The rubber filler according to claim 1 or 2, wherein the white carbon black has a particle size within the range of 20-60nm.

5. A method for preparaing the rubber filler comprising:
(1) carrying out a first reaction on the white carbon black and dopamine in a first buffer solution to obtain a polydopamine-modified white carbon black;
(2) subjecting the polydivinylbenzene microspheres to a second reaction in a second buffer solution with the polydivinylbenzene microspheres obtained in step (1) to obtain the polydivinylbenzene microspheres loaded with polydopamine-modified white carbon black; wherein the mass ratio of the polydivinylbenzene microspheres to the polydopamine-modified white carbon black is 1:(0.5-20).

6. The method according to claim 5, wherein step (1) specifically comprising:
adding an inorganic acid or inorganic base into a weak alkalinity buffering agent solution to obtain a first buffer solution with a pH of 7.5-10.5, wherein the concentration of the buffering agent in the first buffer solution is within the range of 3-15 mmol/L;
adding white carbon black and dopamine into the first buffer solution, carrying out the reaction for 0.5-2h at room temperature, and then filtering, washing, and drying to obtain the polydopamine-modified white carbon black.

7. The method according to claim 6, wherein the mass ratio of the white carbon black and dopamine is 1:(0.05-1);
and/or the mass ratio of the white carbon black to the first buffer solution is 1:(5-50);
and/or the weak alkalinity buffering agent is one or more selected from the group consisting of trihydroxymethyl aminomethane, barbital, barbital-sodium chloride composite buffering agent, boric acid-potassium chloride composite buffering agent, borax-calcium chloride composite buffering agent, disodium hydrogen phosphate, and dipotassium hydrogen phosphate - potassium dihydrogen phosphate composite buffering agent;
and/or the inorganic acid is one or more of hydrochloric acid, nitric acid, sulfuric acid, and phosphoric acid;
and/or the inorganic base is potassium hydroxide and/or sodium hydroxide.

8. The method according to claim 5 or 6, wherein step (2) specifically comprising:
adding an inorganic acid or inorganic base into a weak alkalinity buffering agent solution to obtain a second buffer solution with a pH of 7.5-10.5, wherein the concentration of the buffering agent in the second buffer solution is within the range of 3-15 mmol/L;
adding polydivinylbenzene microspheres and the polydopamine-modified white carbon black obtained in step (1) into the second buffer solution, carrying out the reaction with magnetic stirring at room temperature for 1-4h, then filtering, washing, and drying the reaction product to obtain the polydivinylbenzene microspheres loaded with the polydopamine-modified white carbon black.

9. The method according to claim 8, wherein the mass ratio of the polydivinylbenzene microspheres to the polydopamine-modified white carbon black is 1:(1-10);
and/or the mass ratio of the polydivinylbenzene microspheres and the second buffer solution is 1:(50-500);
and/or the weak alkalinity buffering agent is one or more selected from the group consisting of trihydroxymethyl aminomethane, barbital, barbital-sodium chloride composite buffering agent, boric acid-potassium chloride composite buffering agent, borax-calcium chloride composite buffering agent, disodium hydrogen phosphate, and dipotassium hydrogen phosphate-potassium dihydrogen phosphate composite buffering agent;
and/or the inorganic acid is one or more of hydrochloric acid, nitric acid, sulfuric acid, and phosphoric acid;
and/or the inorganic base is potassium hydroxide and/or sodium hydroxide.

10. A rubber composite comprising: a solution polymerized crude rubber, a first filler, and a second filler, wherein the first filler is the rubber filler according to any one of claims 1-4 or the rubber filler produced with the preparation method according to any one of claims 5-9, and the second filler is a polydopamine-modified white carbon black; the total addition amount of the first rubber filler and the second rubber filler is 10-60wt% of the dry basis mass of the solution polymerized crude rubber.

11. The rubber composite according to claim 10, wherein the mass ratio of the first filler and the second filler is 1:(0.5-20).

12. The rubber composite according to claim 10 or 11, wherein the addition amount of the second rubber filler is 10-40wt% of the dry basis mass of the solution polymerized crude rubber.

13. The rubber composite according to claim 10 or 11, wherein the rubber composite further comprises an auxiliary agent.

14. The rubber composite according to claim 13, wherein the auxiliary agent is one or more selected from the group consisting of a vulcanizing agent, an anti-aging agent, an accelerant, and an activator.

15. The rubber composite according to claim 10 or 11, wherein the solution-polymerized crude rubber is one or more selected from the group consisting of solution-polymerized styrene-butadiene rubber, polyisoprene rubbe, cis-butadiene rubber, and butyl rubber.

16. A method for preparaing the rubber composite comprising:
mixing the solution polymerized crude rubber with a first filler and a second filler, and then vulcanizing the mixture to prepare a rubber composite; wherein the first filler is the rubber filler according to any one of claims 1-4 or the rubber filler produced with the preparation method according to any one of claims 5-9, and the second filler is a polydopamine-modified white carbon black; the total addition amount of the first rubber filler and the second rubber filler is 10-60wt% of the dry basis mass of the solution polymerized crude rubber.

17. The method according to claim 16, wherein the mass ratio of the first filler and the second filler is 1:(0.5-20).

18. The method according to claims 16 or 17, wherein the addition amount of the second rubber filler is 10-40wt% of the dry basis mass of the solution polymerized crude rubber.

19. The method according to claims 16 or 17, wherein an auxiliary agent is further added in the mixing step.

20. The method according to 19, wherein the auxiliary agent is one or more selected from the group consisting of a vulcanizing agent, an anti-aging agent, an accelerant, and an activator.

21. The method according to claims 16 or 17, wherein the solution-polymerized crude rubber is one or more selected from the group consisting of solution-polymerized styrene-butadiene rubber, polyisoprene rubber, cis-butadiene rubber, and butyl rubber.

22. A use of the rubber composite according to any one of claims 10-15 or the rubber composite produced with the method according to any one of claims 16-21 in a tire.
